Europäisches Patentamt

European Patent Office

Office européen des brevets

(19)

(11) Veröffentlichungsnummer: **0 204 098 B1**

(12) **EUROPÄISCHE PATENTSCHRIFT**

(45) Veröffentlichungstag der Patentschrift: **06.11.91**

(51) Int. Cl.⁵: **G01N 1/10**, B01D 35/22

(21) Anmeldenummer: **86104520.1**

(22) Anmeldetag: **02.04.86**

(54) **Probeentnahmegerät.**

(30) Priorität: **07.06.85 DE 3520489**

(43) Veröffentlichungstag der Anmeldung:
**10.12.86 Patentblatt 86/50**

(45) Bekanntmachung des Hinweises auf die
Patenterteilung:
**06.11.91 Patentblatt 91/45**

(84) Benannte Vertragsstaaten:
**AT BE CH DE FR GB IT LI LU NL SE**

(56) Entgegenhaltungen:
**AT-B- 284 515
DE-A- 2 741 466
GB-A- 1 338 299**

(73) Patentinhaber: **B. Braun-SSC AG
Gerliswilstrasse 74
CH-6020 Emmenbrücke(CH)**

Patentinhaber: **Gesellschaft für Biotechnologische Forschung mbH (GBF)
Mascheroder Weg 1
W-3300 Braunschweig-Stöckheim(DE)**

(72) Erfinder: **Kroner, Karl-Heinz, Dipl.-Ing.
Schneekoppeweg 30
W-3340 Wolfenbüttel(DE)**

(74) Vertreter: **von Kreisler, Alek, Dipl.-Chem. et al
Deichmannhaus am Hauptbahnhof
W-5000 Köln 1(DE)**

## Beschreibung

Die Erfindung betrifft ein Probeentnahmegerät zur Entnahme gefilteter Proben aus Flüssigkeiten, mit einem Behälter, der über einer Filtermembran einen drehbaren Rührer aufweist, einem oberhalb der Filtermembran in den Behälter mündenden Einlaß und einem unterhalb der Filtermembran aus dem Behälter herausführenden Filtrat-Auslaß.

Bekannt sind Rührzellen mit einem hängend über einer Filtermembran angebrachten Magnetrührstab (AMICON-Magnetrührzelle). Die Filtermembran ruht auf einer Scheibe, die an ihrer Oberseite Profilierungen zum Abführen des Filtrats aufweist. Die zu filtrierende Flüssigkeit wird durch einen Einlaß im Behälterdeckel unter Druck in den Behälter eingeführt und vom Magnetrührstab über der Filtermembran in Bewegung gehalten.

Für die chemische, insbesondere die biochemische, Prozeßtechnik ist ein steigender Bedarf an on-line-Meßverfahren für die Bestimmung von chemischen Stoffgrößen im Prozeß zum Zwecke der Überwachung, Regelung und Steuerung vorhanden. Dabei sollte die Zeitspanne zwischen Probenentnahme und Verfügbarkeit des Ergebnisses möglichst gering sein. Für eine on-line-Analytik müssen in der Regel die folgenden vier Teilschritte durchgeführt werden:

1. Probenahme durch Abzweigung eines repräsentativen Teilstroms,
2. Probeaufbereitung (z.B. Abtrennung von Feststoffen oder störenden Begleitstoffen),
3. Analytische Bestimmung (Detektionsverfahren),
4. Auswertung (Registrierung).

Die ersten beiden Teilschritte sind dabei oft mit erheblichen Schwierigkeiten verbunden, wenn ein schnelles Zeitverhalten gefordert wird.

Die bekannten Probeentnahmegeräte ermöglichen in der Regel nur eine diskontinuierliche Probeentnahme gelöster oder gasförmiger niedermolekularer Komponenten. Für die repräsentative Entnahme von Makromolekülen, wie z.B. Proteine und Enzyme, sind die vorhandenen Systeme ungeeignet, weil Denaturierungserscheinungen und nicht kontrollierbare Belegungs- bzw. Verstopfungsprobleme auftreten. Dialysesysteme haben prinzipiell den Nachteil größerer Totzeiten, weil die zum Stofftransport benötigte Konzentrationsdifferenz berücksichtigt werden muß.

In der Biotechnologie werden By-pass-Systeme mit geschlossenem Kreislauf benutzt, um beispielsweise eine kontinuierliche Fermentation mit Zellmasserückhaltung zur Ernte von Zellen und bei der Aufarbeitung von Bioprodukten durchzuführen. Der Einsatz solcher Techniken zur kontinuierlichen Probeentnahme ist wegen des Problems des Membranfoulings durch Adsorptions- und Polarisierungseffekte schwierig. Weitere Probleme ergeben sich durch die in der Regel großen Totvolumina mit entsprechend hohen Antwortzeiten sowie durch die geringen Standzeiten.

Der Erfindung liegt die Aufgabe zugrunde, ein Probeentnahmegerät der eingangs genannten Art zu schaffen, das eine kontinuierliche Probeentnahme bei weitgehend gleichmäßiger Durchlässigkeit der Filtermembran ermöglicht.

Die Lösung dieser Aufgabe besteht erfindungsgemäß darin, daß der Einlaß in Bodennähe angeordnet ist und gleichgerichtet mit der Rührerdrehung tangential in dem Behälter mündet und daß der Behälter in der oberen Stirnwand einen Auslaß aufweist.

Das erfindungsgemäße Probeentnahmegerät ermöglicht einen ständigen Austausch des gesamten Behältervolumens mit einer Rate, die viel höher ist als die Filtrationsrate. Durch den tangential angeordneten Einlaß wird die Flüssigkeit unter kontrollierter Verwirbelung in den Innenraum des Behälters eingeleitet und der Rührer erzeugt über der Filtermembran ein sich ständig änderndes Druckwechselfeld zum Freihalten der Filtermembran von Rückständen. Die Filtermembran wird durch den tangentialen Einlaß ständig mit hoher Flüssigkeitsrate überspült und dieser Effekt wird durch den mit dem Flüssigkeitsstrom gleichlaufenden Rührer verstärkt. Auf diese Weise wird verhindert, daß die Membran sich mit Feststoffen zusetzt. Die Feststoffe werden vielmehr von der Membran abgespült und mit der strömenden Flüssigkeit durch den Auslaß hindurch aus dem Behälter entfernt. Auf diese Weise ergibt sich bei hoher Standzeit ein gleichmäßiger Filtratertrag und eine kurze Antwortzeit des Gerätes bzw. Systems.

Der Auslaß ist vorzugsweise an der dem Einlaß gegenüberliegenen Seite angeordnet. Er liegt tiefer als der Auslaß, so daß die frisch zugeführte Flüssigkeit zunächst über die Filtermembran streicht und anschließend ansteigt, um nach mehrmaligem Drehen über der Filtermembran schließlich zum Auslaß zu gelangen. Das Probeentnahmegerät bewirkt eine optimale Kontrolle der Deckschichtbildung auf der Filtermembran. Durch Zusammenwirken des dicht über der Filtermembran rotierenden Rührbalkens in Verbindung mit dem tangentialen Einlaß wird an der Filtermembran ein gerichtetes Turbulenzfeld erzeugt. Der Rührbalken hat von der Filtermembran einen solchen Abstand, daß gerade keine Scherung an der Filtermembran auftritt, so daß Überströmung der Membran und Durchströmung des Gerätes voneinander

EP 0 204 098 B1

entkoppelt werden. Entscheidend für die Filtratmenge ist nicht der statische Betriebsdruck, sondern vielmehr der durch den Rührer erzeugte dynamische Wechseldruck. Damit ist es möglich, den statischen Betriebsdruck in weiten Grenzen frei zu wählen, und insbesondere sehr klein zu halten.

Zur Erzielung eines geringen Totraumvolumens und damit einer kurzen Antwortszeit des Systems ist vorgesehen, daß der Boden des Behälters eine von der Bodenmitte zum Filtratauslaß führende Nut aufweist und daß unmittelbar auf dem Boden eine mit zahlreichen Löchern versehene Scheibe als Membranträger angeordnet ist, an deren Unterseite Rillen vorgesehen sind, in die die Löcher münden. Das Totraumvolumen wird hierbei im wesentlichen durch das Volumen der Rillen bestimmt. Das Filtrat kann nach dem Passieren der Membran schnell zum Filtratauslaß abfließen. Dadurch gelingt es, von allen Seiten des Bodens Flüssigkeit auf dem kürzesten Weg zum Filtratauslaß abzuführen. Zweckmäßigerweise verlaufen die Rillen radial und ihre inneren Enden sind mit einem Sammelraum verbunden, der im Mittelbereich der Scheibe an deren Unterseite gebildet ist.

Die Löcher verjüngen sich zum Umfang der Scheibe hin. Dadurch wird ein gleichmäßiger Abzug des Filtrats repräsentativ über den Querschnitt der Scheibe ermöglicht.

Zweckmäßigerweise weist die Scheibe auf ihrer Oberseite einen schrägen Rand auf, gegen den ein Dichtungsring drückt. Die Scheibe ist nach außen hin abgeflacht. Der Dichtungsring dient nicht nur der Abdichtung des Systems nach außen, sondern auch zur Fixierung der Filtermembran auf dem Randbereich der Scheibe.

Gemäß einer bevorzugten Ausführungsform der Erfindung ist vorgesehen, daß der Rührbalken einen sich nach unten verjüngenden Querschnitt und am unteren Ende eine Abrißkante aufweist. Die Abrißkante bewegt sich in kontrolliertem Abstand mit hoher Geschwindigkeit (300 bis 500 Upm) oberhalb der Filtermembran und erzeugt dadurch das Druckwechselfeld, mit dem die Flüssigkeit durch die Filtermembran hindurchgetrieben wird. Die Abrißkante steht senkrecht und ihr Querschnitt bildet vorzugsweise einen Winkel von annähernd 60°.

Der Auslaß ist an der höchsten Stelle der Innenseite der oberen Stirnwand des Behälters angeordnet und diese Stirnwand weist im Mittelbereich einen zum Behälterinneren vorstehenden Vorsprung auf. Dadurch wird verhindert, daß Luftblasen, die im Prozeßstrom von Bioreaktoren vorkommen, die Mischwirkung stören. Die Luftblasen steigen im Behälter auf und werden durch den Auslaß abgeführt.

Als Rührer wird vorzugsweise ein Magnetrührer benutzt, der einen während der Rotation höhenverstellbaren Rührbalken aufweist.

Im folgenden wird unter Bezugnahme auf die Zeichnungen ein Ausführungsbeispiel der Erfindung näher erläutert.

Es zeigen:

Fig. 1 eine schematische Darstellung einer Einrichtung zur kontinuierlichen Probenentnahme,

Fig. 2 einen Vertikalschnitt durch das Probeentnahmegerät,

Fig. 3 eine Draufsicht des Probeentnahmegerätes,

Fig. 4 eine Draufsicht auf das Unterteil des Probeentnahmegerätes bei abgenommenem Oberteil,

Fig. 5 einen vergrößerten Querschnitt des Bereichs des Filtratauslasses, und

Fig. 6 eine Ansicht der Unterseite der als Membranträger dienenden Scheibe.

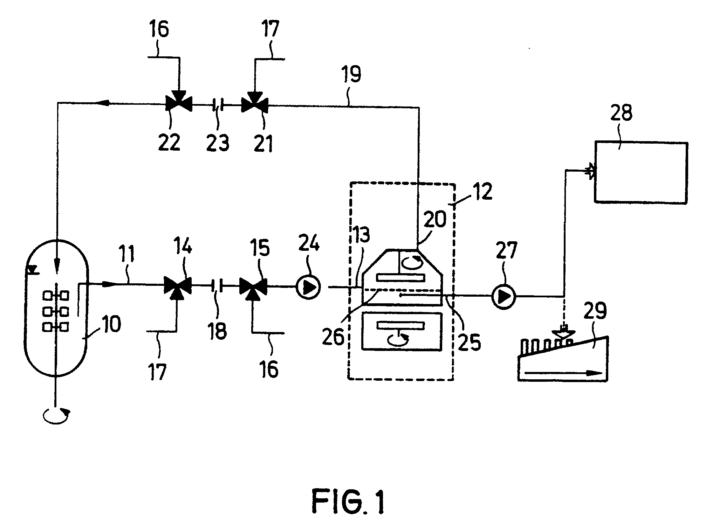

Gemäß Figur 1 ist ein Bioreaktor 10 vorgesehen, dessen Auslaß über eine Leitung 11 mit dem Einlaß 13 des Probeentnahmegerätes 12 verbunden ist. Die Leitung 11 enthält zwei Wegeventile 14 und 15, von denen das Wegeventil 15 an eine Dampfleitung 16 angeschlossen ist. Das Wegeventil 14 ist an eine Dampfauslaßleitung 17 angeschlossen. Zwischen den Wegeventilen 14 und 15 ist ein Absperrventil 18 angeordnet.

In gleicher Weise sind in der Leitung 19, die den Auslaß 20 des Probeentnahmegerätes 12 mit dem Einlaß des Bioreaktors 10 verbindet, zwei Wegeventile 21 und 22 vorgesehen, zwischen denen ein Absperrventil 23 angeordnet ist. Über das Wegeventil 22 kann Sterilisationsdampf dem Bioreaktor 10 zugeführt werden, während der Auslaß 20 des Probeentnahmegerätes über das Wegeventil 21 mit der Dampfauslaßleitung 17 verbindbar ist. Zwischen dem Wegeventil 15 und dem Einlaß 13 ist eine Pumpe 24 angeordnet.

Zum Sterilisieren des Bioreaktors 10 bzw. des Probeentnahmegerätes 12 werden die Absperrventile 18 und 23 geschlossen, so daß Dampf durch den Bioreaktor 10 und/oder durch das Probeentnahmegerät 12 geschickt werden kann. Dabei werden auch die Leitungen 11 und 19 sowie die Pumpe 24 sterilisiert.

Zur kontinuierlichen Probeentnahme aus dem Bioreaktor 10 wird über die Pumpe 24 Flüssigkeit aus dem Bioreaktor zum Probeentnahmegerät 12 gepumpt. Die Flüssigkeit verläßt das Probeentnahmegerät durch den Auslaß 20, um wieder zum Bioreaktor 10 zurückgeführt zu werden. Im Probeentnahmegerät 12 werden Feststoffe in dem geschlossenen Kreislauf zwischen Bioreaktor und Probeentnahmegerät zurückgehalten und das Filtrat, das die Filtermembran 26 passiert hat, wird über den Filtratauslaß 25 und die Pumpe

3

27 dem Analysator 28 sowie einem Fraktionssammler 29 zugeführt.

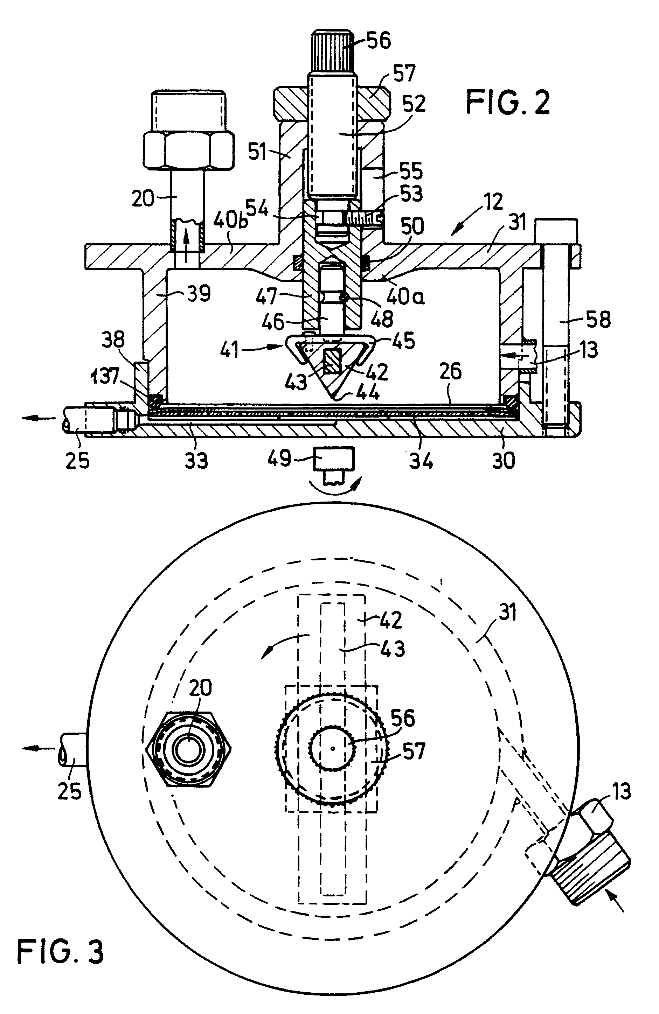

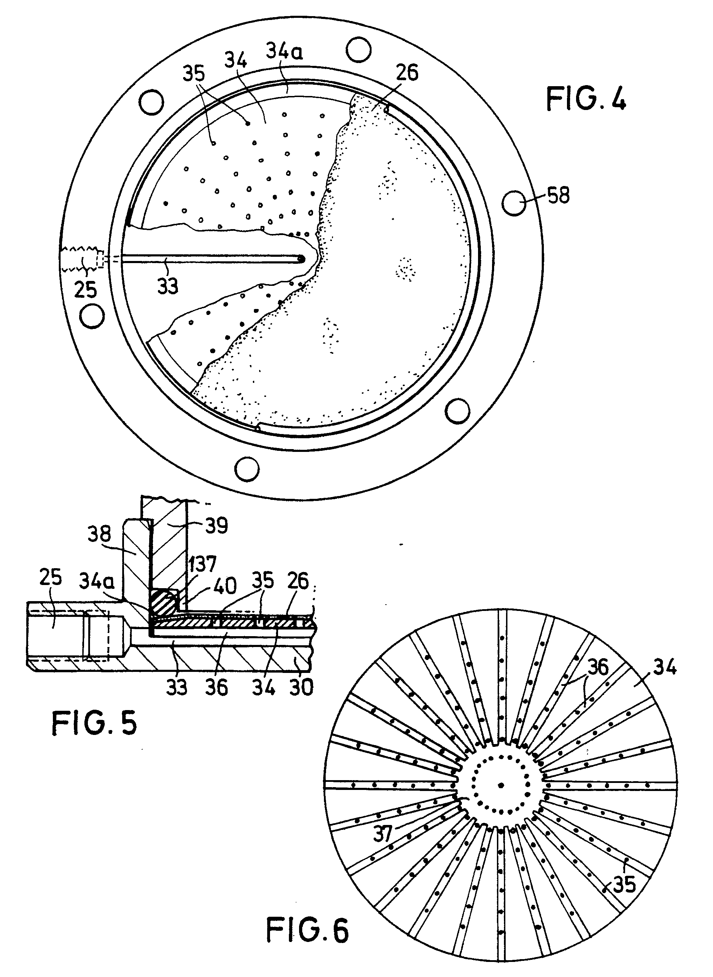

Das in den Figuren 2 bis 6 dargestellte Probeentnahmegerät 12 weist einen Behälter aus einem Unterteil 30 und einem Oberteil 31 auf. Das Unterteil 30 besteht aus einer zylindrischen Wanne mit ebenem Boden, in dem eine sich von der Mitte bis zum Filtratauslaß 25 erstreckende radiale Nut 33 angeordnet ist. Auf dem Boden des Unterteils 30 liegt die Scheibe 34, die als Träger für die Filtermembran 26 dient, flach auf. Diese Scheibe 34 ist mit zahlreichen Löchern 35 versehen, die entlang radialer Linien angeordnet sind. An der Unterseite der Scheibe 34 befinden sich unterhalb der Löcher 35 radiale Rillen 36, wobei jeweils eine Lochreihe in eine der Rillen 36 mündet. Die Rillen 36 (Fig. 6) laufen an ihren äußeren Enden am Rand der Scheibe 34 frei aus. Die inneren Enden der Rillen 36 münden in einen Sammelraum 37 im Zentrum der Scheibe 34. Der Sammelraum 37 hat die gleiche Tiefe wie die Rillen 36 und in ihm münden einige der Löcher 35 im Mittelbereich der Scheibe. Die Durchmesser der Löcher 35 verringern sich von innen nach außen.

Wie Figuren 4 und 5 zeigen, ist der Rand 34a der Scheibe 34 nach außen hin abgeflacht. Ein Dichtungsring 137 drückt den Rand der Filtermembran 26 gegen den Rand 34a der Scheibe 34. Dieser Dichtungsring 37 dichtet außerdem den Spalt zwischen der Umfangswand 38 des Unterteils 30 und der Umfangswand 39 des Oberteils 31 ab. Die zylindrische Umfangswand 39 ist in die Umfangswand 38 eingeschoben, und sie weist am unteren Ende eine nach innen durch den axialen Steg 40 begrenzte Ausnehmung zur Aufnahme des Dichtungsrings 137 auf. Der Steg 40 bildet die Verlängerung der Innenseite der Umfangswand 39 und er endet dicht oberhalb der Filtermembran 26.

In der Umfangswand 39 des Oberteils 31 befindet sich der Einlaß 13, der tangential in das Behälterinnere mündet. "Tangential" bedeutet hier, daß die Richtung des Kanals, den der Einlaß 13 bildet, nicht auf die Längsachse des Gehäuses zeigt und daß die einströmende Flüssigkeit wenigstens annähernd parallel zur Umfangswand 39 in das Behälterinnere eingeführt wird, so daß sie entlang der Umfangswand kreist. Der Einlaß 13 befindet sich in der unteren Hälfte des Behälters.

An der oberen Stirnwand 40b des Oberteils 31 ist der Auslaß 20 angeordnet, der sich an der höchsten Stelle des Innenraumes des Behälters befindet. Die Stirnwand 40 weist im Mittelbereich einen in das Behälterinnere vorstehenden Vorsprung 40a auf. Luftblasen, die in den Behälter eingeführt werden, steigen in den den Vorsprung 40a umgebenden Ringraum auf und werden durch den Auslaß 20 abgeführt.

Der koaxial in das Behälterinnere eintauchende Rührer 41 besteht aus einem horizontalen Rührbalken 42, welcher einen Magneten 43 enthält. Der Rührbalken 42, der sich nahezu über den gesamten Durchmesser des Innenraums des Behälters erstreckt, hat dreieckigen Querschnitt mit nach unten weisender Spitze. Diese Spitze bildet die Abrißkante 44, die über der Filtermembran 26 angeordnet ist. Der Winkel an der Abrißkante 44 beträgt 60°.

Der Rührbalken 42, der aus Polytetrafluorethylen besteht, ist mit einer Klammer 45 an einem vertikalen Stutzen 46 befestigt der in der Hülse 47 freidrehbar gelagert ist. Ein in der Hülse 47 fixierter Tangentialstift 48 ragt mit einem Teil seines Umfangs in eine Ringnut des Stutzens 46 hinein, um den Stutzen gegen axiale Verschiebungen zu sichern. Der Antrieb des Rührbalkens 42 erfolgt durch einen Antriebsmagneten 49, der in einer Antriebseinheit unterhalb des Behälters angeordnet ist und der mit seinem Magnetfeld auf den im Rührbalken 42 enthaltenen Magneten 43 einwirkt. Die Hülse 47 führt durch eine mit der Dichtung 50 abgedichtete Bohrung der Stirnwand 40 hindurch in den rohrförmigen Ansatz 51 des Gehäuses hinein. In das obere Ende der Hülse 47 ragt der Justierbolzen 52, der mit seinem Außengewinde in einem Innengewinde des Ansatzes 51 verstellbar ist. Ein in die Wand der Hülse 47 eingeschraubter Bolzen 53 ragt in eine Nut 54 des Justierbolzens 52 hinein, um die Hülse gegen axiale Verschiebungen des Justierbolzen 52 zu sichern, Drehungen des Justierbolzens gegenüber der Hülse jedoch zu ermöglichen. Das äußere Ende des Bolzen 53 ist in einem vertikalen Führungsschlitz 55 des Ansatzes 51 geführt. An der Stellung des Bolzens 53 kann man die Höhe ablesen, in der sich der Rührbalken 42 über der Membran 26 befindet.

Der Justierbolzen 52 ist an seinem äußeren Ende mit einem Drehknopf 56 versehen. Außerdem ist eine Kontermutter 57 von außen her auf das Außengewinde des Justierbolzens 52 aufgeschraubt.

Durch Drehen des Drehknopfes 56 kann die Höhe des Rührbalkens 52 über der Membran 26 auch während des Betriebes des Magnetrührwerks 41 verändert werden. Dies ist für den on-line-Betrieb wichtig, weil es gelegentlich erforderlich ist, die Höhe des Rührbalkens zu verändern, ohne den kontinuierlichen Strömungsbetrieb zu unterbrechen. Ferner kann dadurch der Abtrennvorgang während des Betriebes eventuellen Veränderungen des Prozeßfluides (z.B. Feststoffgehalt, Viskosität) angepaßt werden.

Das obere Gehäuseteil 31 ist mit dem unteren Gehäuseteil 30 durch Schrauben 58 verbunden, die durch entsprechende Außenflansche beider Gehäuseteile hindurchgeführt sind.

Über die Filtermembran 26 kann ein (nicht dargestellter) flacher Niederhalter gelegt werden, der Aufwölbungen der Filtermembran verhindert.

Beim Betrieb des Probeentnahmegerätes wird dem Einlaß 13 Flüssigkeit aus dem Bioreaktor 10

4

zugeführt. Diese Flüssigkeit strömt durch den Innenraum des Behälters und verläßt diesen durch den oberen Auslaß 20. Der rotierende Rührbalken 42 erzeugt mit seiner symmetrisch nach unten gerichteten Abreißkante 44 über der Filtermembran 26 ein Druckwechselfeld, das sich dem statischen Druck im Behälterinneren überlagert. Durch dieses Druckwechselfeld entsteht ein kreisend über die Membran 26 wandernder Druckberg, der das Filtrat durch die Membran drückt. Hinter dem Druckberg entsteht ein Sog, der Feststoffbestandteile, die sich auf der Membran abgelagert haben, aufwirbelt und in den kreisenden Flüssigkeitsstrom zurückführt. Auf diese Weise wird das Entstehen von Ablagerungen auf der Membran verhindert.

Das Totvolumen unterhalb der Membran 26 wird von dem Volumen der Löcher 35 und Rillen 36 sowie dem Sammelraum 37 und der Nut 33 gebildet. Dieses Totvolumen ist äußerst gering, z.B. 2 ml.

Dies ist wegen der verhältnismäßig geringen Transmembranenfließgeschwindigkeit (zwischen 0,3 bis $4 \times 10^{-4}$ cm/s) erforderlich. Es werden Totzeiten von 2 min und Antwortzeiten bei sprungförmigen Konzentrationsänderungen von $\leq$ 10 min erreicht. Damit können Konzentrationsgradienten von $\geq$ = 5%/min noch verzerrungsfrei wiedergegeben werden.

Der Behälter sowie alle in ihm befindlichen Teile bestehen aus dampfsterilisierbarem Material, z.B. Stahl oder Teflon®.

Nachstehend werden die wesentlichen Daten eines praktisch ausgeführten Probenentnahmegerätes angegeben:

| Volumen: | ca. 200 ml |
|---|---|
| Membranfläche: | ca. 63 cm² |
| Durchmesser: | ca. 90 mm |
| Drehzahl: | 300-600 Upm |
| Betriebsdrücke: | 0.1 - 0.4 bar |
| Zulaufrate: | 20 - 30 l/h |
| Filtratrate: | 0.1 - 1 ml/min |
| Totzeit: | ca. 2 min |
| Signalsteilheit: | $\geq$ 5 % min$^{-1}$ |

Nachstehend werden noch einmal die wichtigsten Vorteile des Probeentnahmegerätes nach der Erfindung bzw. ihrer Weiterbildungen gegenüber dem Stand der Technik angegeben:
- in-situ bedämpfbar, autoklavierbar, sterilisierbar
- einfache Kopplung, jederzeit zugänglich
- geringer Wartungsaufwand (Rüstzeit $\leq$ 30 min)
- effektive Kontrolle der Membranbelegung durch höhenverstellbares Rührorgan
- magnetischer Antrieb (kein Wellendurchgang)
- geringer Kontrollaufwand
- hohe Standzeiten (auch bei komplexen Medien)
- aseptischer Betrieb
- freie Wahl der Membran
- Entkopplung von Überströmung der Membran und Durchströmung des Moduls (unabhängig vom Prozeßstrom)
- geringe Durchströmungsraten (kleine Pumpleistung)
- geringer Einfluß auf den Prozeßstrom
- feststofffreies Filtrat (kontinuierlich)
- geringe Verzugszeiten (keine Verzerrung von Konzentrationsprofilen durch Rückvermischung)
- Ankopplung verschiedener Analysatoren
- Ausführung in Edelstahl
- Betrieb mit einfachen Labormitteln möglich (Pumpen, Magnetrührer)
- repräsentative Entnahme auch von Makromolekülen

## Patentansprüche

1. Probeentnahmegerät zur Entnahme gefilterter Proben aus Flüssigkeiten, mit einem Behälter (12), der über einer Filtermembran (26) einen drehbaren Rührer (41) aufweist, einem oberhalb der Filtermembran (26) in dem Behälter (12) mündenden Einlaß (13) und einem unterhalb der Filtermembran (26) aus dem Behälter (12) herausführenden Filtratauslaß (25),

**dadurch gekennzeichnet,** daß
der Einlaß (13) in Bodennähe angeordnet ist und gleichgerichtet mit der Rührerdrehung tangential in dem Behälter (12) mündet und daß der Behälter (12) in der oberen Stirnwand (40b) einen Auslaß (20) aufweist.

2. Probeentnahmegerät nach Anspruch 1,
**dadurch gekennzeichnet,** daß
der Auslaß (20) an der dem Einlaß (13) gegenüberliegenden Seite angeordnet ist.

3. Probeentnahmegerät nach Anspruch 1 oder 2,
**dadurch gekennzeichnet,** daß
der Boden des Behälters (12) eine von der Bodenmitte zum Filtratauslaß (25) führende Nut (33) aufweist und daß unmittelbar auf dem Boden eine mit zahlreichen Löchern (35) versehene Scheibe (34) als Membranträger angeordnet ist, an deren Unterseite Rillen (36) vorgesehen sind, in die die Löcher (35) münden.

4. Probeentnahmegerät nach Anspruch 3,
**dadurch gekennzeichnet,** daß
die Rillen (36) radial verlaufen und an ihren inneren Enden mit einem Sammelraum (37) verbunden sind.

5. Probeentnahmegerät nach Anspruch 3 oder 4,
**dadurch gekennzeichnet,** daß
die Löcher (35) sich zum Umfang der Scheibe (34) hin verjüngen.

6. Probeentnahmegerät nach einem der Ansprüche 1 bis 5,
**dadurch gekennzeichnet,** daß
die Scheibe (34) auf ihrer Oberseite einen schrägen Rand (34a) aufweist, gegen den ein Dichtungsring (137) drückt.

7. Probeentnahmegerät nach einem der Ansprüche 1 bis 6,
**dadurch gekennzeichnet,** daß
der Rührbalken (42) einen sich nach unten verjüngenden Querschnitt und am unteren Ende eine Abreißkante (44) aufweist.

8. Probeentnahmegerät nach Anspruch 7,
**dadurch gekennzeichnet,** daß
die Abreißkante (44) senkrecht steht und daß ihr Querschnitt einen Winkel von annähernd 60° bildet.

9. Probeentnahmegerät nach einem der Ansprüche 1 bis 8,
**dadurch gekennzeichnet,** daß
der Auslaß (20) an der höchsten Stelle der Innenseite der oberen Stirnwand (40b) angeordnet ist und daß die Stirnwand im Mittelbereich einen zum Behälterinneren vorstehenden Vorsprung (40a) aufweist.

10. Probeentnahmegerät nach einem der Ansprüche 1 bis 9,
**dadurch gekennzeichnet,** daß
der Rührer (41) ein von einem rotierenden externen Magneten (49) angetriebener Magnetrührer ist, der einen während der Rotation höhenverstellbaren Rührbalken (42) aufweist.

11. Probeentnahmegerät nach Anspruch 10,
**dadurch gekennzeichnet,** daß
ein Stutzen (46) des Rührbalkens (42) in einer an der oberen Stirnwand (40b) des Behälters höhenverstellbar montierten Hülse (47) freidrehbar gelagert ist.

12. Probeentnahmegerät nach Anspruch 11,
**dadurch gekennzeichnet,** daß
die Hülse (47) einen querverlaufenden seitlich abstehenden Bolzen (53) aufweist, der in einen vertikalen Führungsschlitz (55) eines rohrförmigen hohlen Ansatzes (51) der oberen Stirnwand (40b) hineinragt und daß das innere Ende des Bolzens (53) in eine Ringnut (54) eines in die Hülse (47) eintauchenden Justierbolzens (52) hineinragt, der in dem hohlen Ansatz (51) mit einem Gewinde verstellbar ist.

## Claims

1. A sampling device for taking filtered samples from liquids, comprising a container (12) having a rotatable agitator (41) arranged above a filter membrane (26), an inlet (13) opening into said container (12) above said filter membrane (26), and a filtrate outlet (25) leading out of said container (12) below said filter membrane (26),

   characterised in that

   said inlet (13) is arranged close to the bottom and opens tangentially into said container (12) in the direction corresponding to the rotation of said agitator and that said container (12) has an outlet (20) in the upper front wall (40b).

2. The sampling device of claim 1, characterised in that said outlet (20) is arranged on the side facing said inlet (13).

3. The sampling device of claim 1 or 2, characterised in that the bottom of the container (12) has a groove (33) leading from the centre of the bottom to said filtrate outlet (25) and that a disc (34) acting as a membrane support and having a plurality of holes (35) is arranged directly on the bottom, grooves (36) being provided at the undersurface thereof into which said holes (35) terminate.

4. The sampling device of claim 3, characterised in that said grooves (36) extend radially and have their inner ends connected with a collecting chamber (37).

5. The sampling device of claim 3 or 4, characterised in that said holes (35) taper towards the periphery of said disc (34).

6. The sampling device of one of claims 1 to 5, characterised in that said disc (34) has an inclined rim (34a) on its upper surface, against which a seal ring (137) presses.

7. The sampling device of one of claims 1 to 6, characterised in that the agitator bar (42) has a downward tapering cross section and a tear-off edge (44) at the lower end.

8. The sampling device of claim 7, characterised in that said tear-off edge (44) is vertical and that its cross section forms an angle of almost 60°.

9. The sampling device of one of claims 1 to 8, characterised in that said outlet (20) is arranged at the highest point of the inner side of said upper front wall (40b) and that said front wall has a projection (40a) at its central portion protruding towards the interior of said container.

10. The sampling device of one of claims 1 to 9, characterised in that said agitator (41) is a magnetic agitator driven by a rotating external magnet (49), said agitator having an agitator bar (42) that is height-adjustable during rotation.

11. The sampling device of claim 10, characterised in that a shaft (46) of said agitator bar (42) is supported for free rotation in a sleeve (47) mounted for height adjustment at said upper front wall (40b) of said container.

12. The sampling device of claim 11, characterised in that said sleeve (47) has a transversely extending and laterally projecting pin (53) that projects into a vertical guide groove (55) of a tube-shaped hollow neck (51) of said upper front wall (40b) and that the inner end of said pin (53) projects into an annular groove (54) of an adjustment pin (52) protruding into said sleeve (47) which adjustment pin is adjustable in said hollow sleeve (51) by means of a thread.

## Revendications

EP 0 204 098 B1

1. Dispositif de prise d'échantillons destiné au prélèvement d'échantillons filtrés à partir de liquides, comprenant un récipient (12) qui comporte au-dessus d'une membrane de filtration (26) un agitateur (41) rotatif, une ouverture d'entrée (13) débouchant dans le récipient (12) au-dessus de la membrane de filtration (26), et une ouverture de sortie de produit filtré (25) sortant du récipient (12) en dessous de la membrane de filtration (26), caractérisé en ce que l'ouverture d'entrée (13) est disposée à proximité du fond et débouche tangentiellement dans le récipient (12) en étant orientée dans la direction du sens de rotation de l'agitateur, et en ce que le récipient (12) comporte une ouverture de sortie (20) dans la paroi frontale supérieure (40b).

2. Dispositif de prise d'échantillons selon la revendication 1, caractérisé en ce que l'ouverture de sortie (20) est disposée sur le côté opposé à celui où se situe l'ouverture d'entrée (13).

3. Dispositif de prise d'échantillons selon la revendication 1 ou 2, caractérisé en ce que le fond du récipient (12) présente une rainure (33) conduisant du centre du fond à l'ouverture de sortie du produit filtré (25), et en ce qu'un disque (34) pourvu d'un grand nombre de trous (35) et faisant office de porte-membrane, est disposé directement sur le fond et est pourvu sur sa face inférieure, de rainures (36) dans lesquelles débouchent les trous (35).

4. Dispositif de prise d'échantillons selon la revendication 3, caractérisé en ce que les rainures (36) s'étendent radialement et sont reliées à leurs extrémités intérieures, à une chambre de collecte (37).

5. Dispositif de prise d'échantillons selon la revendication 3 ou 4, caractérisé en ce que les trous (35) se rétrécissent en direction de la périphérie du disque (34).

6. Dispositif de prise d'échantillons selon l'une des revendications 1 à 5, caractérisé en ce que le disque (34) présente sur sa face supérieure, un bord chanfreiné (34a) contre lequel s'appuie une bague d'étanchéité (137).

7. Dispositif de prise d'échantillons selon l'une des revendications 1 à 6, caractérisé en ce que le barreau d'agitation (42) présente une section droite se rétrécissant vers le bas, et présente à son extrémité inférieure une arête de décollement (44).

8. Dispositif de prise d'échantillons selon la revendication 7, caractérisé en ce que l'arête de décollement (44) est en position verticale et en ce que sa section droite forme un angle d'environ 60°.

9. Dispositif de prise d'échantillons selon l'une des revendications 1 à 8, caractérisé en ce que l'ouverture de sortie (20) est disposée au point le haut du côté intérieur de la paroi frontale supérieure (40b), et en ce que la paroi frontale présente dans la zone centrale, un bossage (40a) en saillie vers l'intérieur du récipient.

10. Dispositif de prise d'échantillons selon l'une des revendications 1 à 9, caractérisé en ce que l'agitateur (41) est un agitateur magnétique entraîné par un aimant extérieur rotatif (49) et présentant un barreau d'agitation (42) susceptible d'être déplacé en hauteur au cours de la rotation.

11. Dispositif de prise d'échantillons selon la revendication 10, caractérisé en ce qu'un tourillon (46) du barreau d'agitation (42) est disposé librement tournant dans une douille (47) montée sur la paroi frontale supérieure (40b) du récipient, de manière à pouvoir être déplacée en hauteur.

12. Dispositif de prise d'échantillons selon la revendication 11, caractérisé en ce que la douille (47) comporte une broche (53) s'étendant transversalement en saillie latérale, et s'engageant dans une fente de guidage verticale (55) d'un appendice tubulaire creux (51) de la paroi frontale supérieure (40b), et en ce que l'extrémité intérieure de la broche (53) s'engage dans une gorge annulaire (54) d'une broche de réglage (52) s'engageant dans la douille (47) et pouvant être déplacée dans l'appendice creux (51) au moyen d'un filetage.

8

FIG.1

FIG. 2

FIG. 3

FIG. 4

58

FIG. 5

FIG. 6